# FASCICULE DE BREVET EUROPEEN

(11) **EP 1 433 502 B1**
(45) Date de publication et mention de la délivrance du brevet: **11.04.2007**
(21) Numéro de dépôt: 03292689.1
(22) Date de dépôt: 28.10.2003
(51) Int. Cl.: A62B 25/00

(54) **Ensemble d'alimentation en gaz respiratoire pour personnel navigant d'aeronef et boite de rangement pour masque respiratoire de secours**
Atemgasversorgungseinheit für Flugzeugbesatzung und Aufbewahrungsbehälter für eine Notatemmaske
Breathing gas supplying assembly for aircrew and storage box for emergency respiratory mask

(30) Priorité: 24.12.2002 FR 0216679
(43) Date de publication de la demande: 30.06.2004
(73) Titulaire: INTERTECHNIQUE, 78373 Plaisir Cedex (FR)
(72) Inventeur: Martinez, Patrice, 78610 Le Perray en Yvelines (FR); Gerard, Philippe, 78650 Beynes (FR); Lelievre, Benoit, 91430 Igny (FR); Lemasson, Dominique, 78340 Les Clayes sous Bois (FR)
(74) Mandataire: Bérogin, Francis

(56) Documents cités:
- WO-A-90/02582
- US-A1- 2002 189 617

## Description

La présente invention est relative aux ensembles d'alimentation en gaz respiratoire pour personnel navigant d'aéronef - en particulier les pilotes - et aux boîtes de rangement de masque respiratoire de secours pour ce personnel.

En particulier, l'invention concerne une boîte de rangement pour masque respiratoire de secours pour personnel navigant, comprenant un châssis formant un réceptacle pour le masque, comportant lui-même une face ouverte de forme rectangulaire, pour l'introduction et l'extraction du masque, et au moins deux portes obturant au moins partiellement la face ouverte du châssis.

On connaît déjà des boîtes de ce type, dont on extrait le masque par une face fermée par deux portes retenant le masque, s'ouvrant et se refermant chacune autour d'une charnière, les deux charnières de ces portes étant articulées autour de deux axes d'articulation parallèles, voir US 2002/0189617.

Il est apparu aux inventeurs que dans certains cas, il est difficile ou peu avantageux de loger le masque avec son plan de symétrie oro-nasal parallèle à deux côtés de la face ouverte. En particulier il est de plus en plus fréquent de munir les masques d'une visière de protection contre les fumées qui leur donne un encombrement maximum dans le sens transversal au plan de symétrie. Pour tenir compte de cette situation, les inventeurs ont trouvé qu'il était alors possible de prévoir une boîte de section rectangulaire, en particulier carrée, de façon à y placer le masque et à l'extraire alors que le plan de symétrie oro-nasal de ce masque est disposé en diagonale par rapport à deux faces principales parallèles de la boîte.

Les inventeurs ont alors constaté que, dans ce cas, l'extraction du masque hors d'une boîte dont les deux portes tournent autour de deux axes parallèles se heurte à des difficultés, ce qui augmente le temps d'extraction du masque de la boîte, alors qu'en cas d'urgence ce temps doit être le plus faible possible.

Un but de l'invention a notamment pour but de fournir une boîte à masque répondant mieux que celles antérieurement connues aux exigences de la pratique dans de nombreuses situations.

A cet effet, on prévoit, selon un aspect de l'invention, une boîte dont les deux portes (ce qui est le cas le plus fréquent) ou deux des portes sont articulées autour de deux axes d'articulation respectivement situés sur deux bords adjacents de la face ouverte, sensiblement perpendiculaires l'un à l'autre.

Grâce à ces dispositions, l'ouverture des portes et l'extraction du masque lorsque l'utilisateur le tire en forçant les portes dans le sens de l'ouverture vers l'extérieur est aisée, même alors que le masque est orienté avec le plan de symétrie oro-nasal en diagonale par rapport aux faces principales de la boîte. Dans ce cas particulier, en effet, le masque exerce, lors de son extraction, une action symétrique et sensiblement équivalente sur chacune des deux portes. Le temps d'extraction du masque hors de la boîte et de mise en place de celle-ci sur le visage de l'utilisateur peut alors être rendu inférieur aux cinq secondes imposées par la réglementation.

Dans des modes de réalisation avantageux de l'invention, on peut éventuellement avoir recours en outre à une ou plusieurs des dispositions suivantes :
- la boîte comporte deux portes ayant chacune sensiblement une forme de plaque triangulaire, avec un sommet comportant deux côtés formant un angle droit, l'un de ces côtés étant articulé autour de l'un des deux axes d'articulation ;
- les portes comportent chacune un bord diagonal, joignant les deux côtés du sommet formant un angle droit, ce bord diagonal comportant une échancrure symétrique, par rapport à la médiatrice de l'angle s'étendant entre les deux axes d'articulation, à l'échancrure du bord diagonal homologue de l'autre porte ; cette échancrure est située à l'opposé du bord diagonal par rapport au point de croisement des deux axes d'articulation ;
- la face ouverte à une forme sensiblement carrée ;
- la boîte comporte, dans le châssis, un ensemble pneumatique destiné à contrôler l'alimentation en gaz respiratoire du masque respiratoire, et interagissant avec l'une des portes, cet ensemble pneumatique étant positionné à proximité de l'angle s'étendant entre les deux axes d'articulation ; et
- l'une des portes est munie d'un ensemble de commande destiné à coopérer avec l'ensemble pneumatique, pour contrôler l'alimentation en gaz respiratoire du masque respiratoire, cet ensemble de commande étant situé à proximité de l'axe d'articulation de cette porte.

Selon un autre aspect, l'invention concerne un ensemble d'alimentation en gaz respiratoire pour un membre de personnel navigant d'aéronef, comprenant :
- un masque respiratoire de secours comportant un dispositif d'arrivée de gaz respiratoire, et
- une boîte telle que définie ci-dessus, cette boîte étant adaptée pour recevoir le masque de secours orienté dans le châssis, avec le dispositif d'arrivée de gaz respiratoire occupant un angle de la face ouverte opposé à celui correspondant au point de croisement des axes d'articulation.

Souvent, dans cet ensemble, le masque comporte des oreilles de préhension et les portes de la boîte sont adaptées pour que ces oreilles de préhension soient au moins partiellement saillantes sur la face ouverte et dépassent par des échancrures ménagées dans les portes afin de permettre la préhension du masque même lorsque les portes sont fermées.

L'invention vise également à donner une solution avantageuse au besoin d'utiliser au mieux l'espace disponible sur le tableau de bord ou la console d'un avion. Bien souvent la largeur allouée au logement d'un masque est limitée, à un point tel qu'elle ne permet pas d'y placer un masque, notamment à visière, dans l'orientation habituelle. Suivant un autre aspect de l'invention, cette difficulté est écartée par un ensemble d'alimentation en gaz respiratoire pour un membre de personnel navigant d'aéronef, comprenant :
- un masque respiratoire de secours muni d'un régulateur destiné à être raccordé à une conduite souple d'arrivée de gaz respiratoire, généralement d'oxygène,
- une boîte de réception du masque, formant un réceptacle de masque ayant une face ouverte, de forme rectangulaire, d'introduction et d'extraction du masque dans une orientation diagonale par rapport aux côtés de la face ouverte, munie de deux portes déplaçables entre une position de fermeture, où elles obturent la face ouverte en laissant en saillie une fraction du régulateur, et une position d'ouverture vers l'extérieur, permettant le passage du masque, par rotation au bord de la face ouverte autour d'axes respectifs placés sur deux côtés adjacents de la face ouverte. Les portes seront habituellement prévues pour que leur ouverture commande l'ouverture de la conduite d'alimentation en gaz respiratoire, stockée dans la boîte avec le masque.

Les deux portes sont avantageusement de forme approximativement triangulaires avec des échancrures adjacentes délimitant une ouverture proche du coin de la face ouverte le plus éloigné du point de croisement des axes de rotation et livrant passage à la fraction en saillie du régulateur. Cette disposition permet à l'utilisateur de retirer le masque avec un minimum de gêne pour la main.

D'autres aspects, buts et avantages de l'invention apparaîtront à la lecture de la description d'un de ses modes de réalisation.

L'invention sera également mieux comprise à l'aide des dessins, sur lesquels :
- la figure 1 est une représentation schématique, en perspective, de la boîte constitutive de l'ensemble d'alimentation selon l'invention ;
- la figure 2 représente schématiquement, vue de dessus, la boîte de l'ensemble représentée sur la figure 1, sans les portes obturant la face ouverte ; et
- la figure 3 représente, selon une vue analogue à celle de la figure 2, la boîte représentée sur les figures 1 et 2, les portes obturant la face ouverte étant fermées.

Sur les différentes figures, les mêmes références désignent des éléments identiques ou similaires.

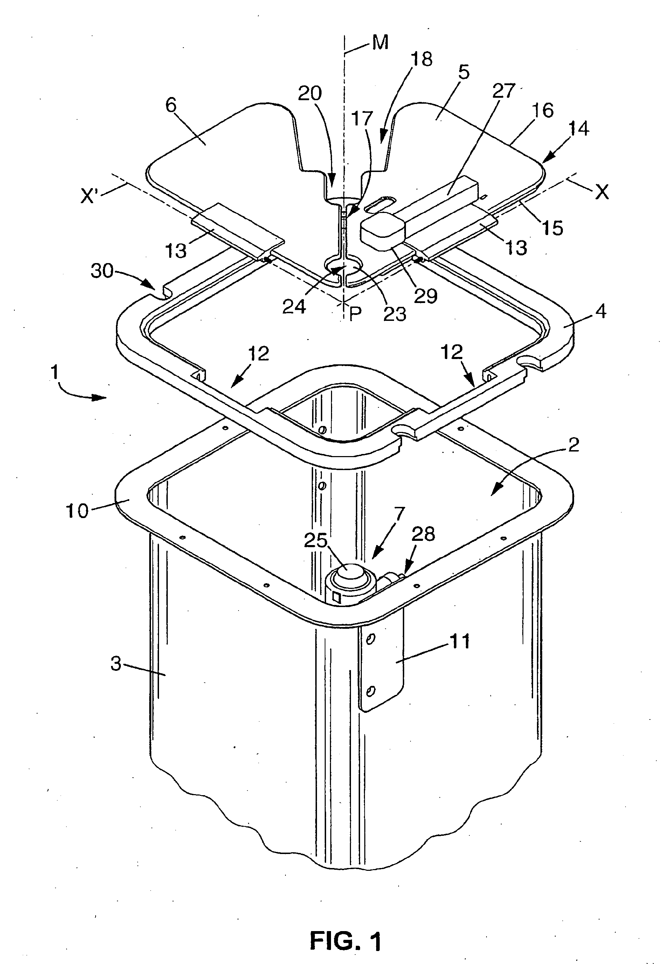

Selon le mode de réalisation illustré par les figures 1 à 3 et présenté ci-dessous, de l'ensemble d'alimentation en gaz respiratoire selon l'invention, celle-ci comporte une boîte 1 sensiblement parallélépipédique, avec une face avant 2 carrée.

Comme représenté sur la figure 1, cette boîte 1 comporte un châssis 3, un chambranle 4, des portes 5 et 6, ainsi qu'un ensemble pneumatique 7.

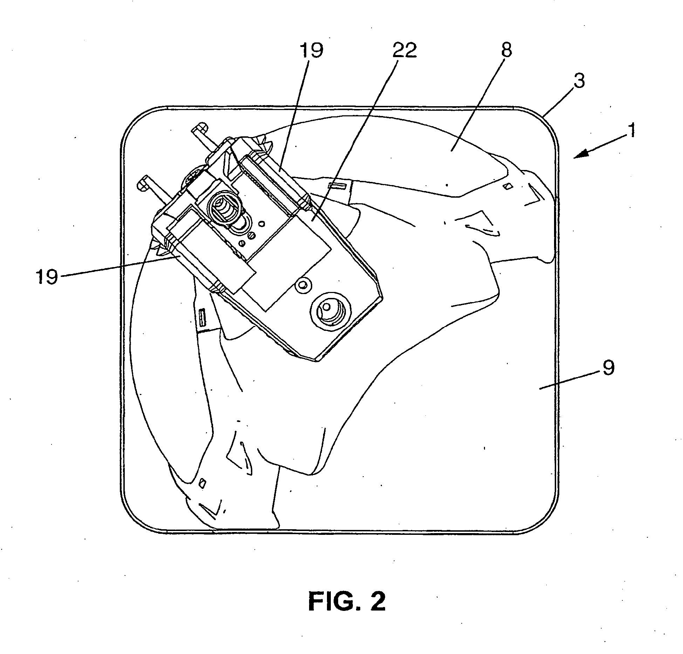

La boîte 1 permet de stocker un masque 8 respiratoire de secours pour personnel navigant d'un aéronef (voir figure 2). Le châssis 3 est inséré dans la console du cockpit de l'aéronef en question. Cette console d'un type tout à fait classique n'est pas décrite dans le présent document.

Le châssis 3 sert de support aux autres composants de la boîte 1 et assure l'interface mécanique avec la console. Comme représenté sur la figure 1, le châssis 3, qui forme un réceptacle pour le masque 8, se présente sous une forme tubulaire à section sensiblement carrée. Il comporte une face ouverte 9 pour l'introduction et l'extraction du masque 8. La face ouverte 9 est entourée d'un cadre 10 qui s'étend perpendiculairement aux parois du tube constitutif du châssis 3. Le cadre 10 comporte des pattes de fixation 11 destinées à la fixation dans la boîte 1 d'un robinet de l'ensemble pneumatique 7. Le châssis 3 est fixé sur la console du cockpit grâce à des moyens s'engageant dans des encoches 30 sur le chambranle 4.

Selon une variante, le châssis 3 peut être réduit à un simple cadre analogue au chambranle 4.

Le chambranle 4 a une forme de carré dont deux côtés adjacents comportent des encoches 12 destinées à l'introduction et l'articulation de ferrures 13 solidaires des portes 5 et 6. Le chambranle 4 est fixé sur le cadre 10. Il entoure la face ouverte 9.

Les ferrures 13 sont articulées dans les encoches 12, chacune respectivement sur des axes d'articulation X, X' perpendiculaires entre eux.

Les portes 5, 6 ont chacune sensiblement une forme de plaque triangulaire. Cette plaque comporte un sommet 14 avec deux côtés 15, 16 formant un angle droit. L'un 15 de ces côtés 15, 16 est articulé autour de l'un (par exemple X) des deux axes d'articulation X, X'.

Chaque porte 5, 6 comporte également un bord diagonal 17 joignant les deux côtés 15, 16 du sommet 14 formant un angle droit. Ce bord diagonal 17 comporte une échancrure 18. Cette échancrure 18 est symétrique, par rapport à la médiatrice M de l'angle s'étendant entre les deux axes d'articulation X, X', à l'échancrure du bord diagonal homologue de l'autre porte. L'échancrure 18 de chaque porte 5,6 est située à l'opposé du bord diagonal 17, par rapport au point P de croisement des deux axes d'articulation X et X'.

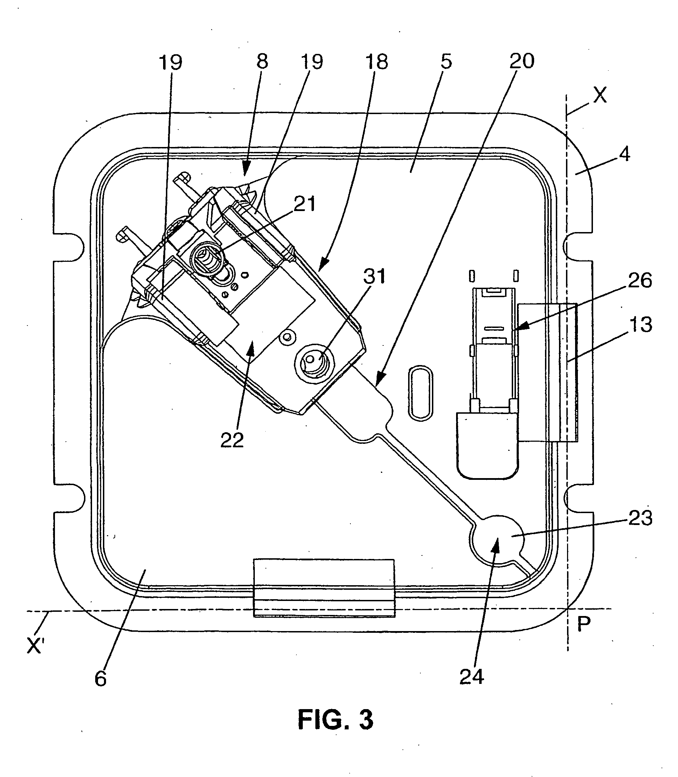

Comme représenté sur la figure 3, les portes 5, 6 assurent une protection partielle du masque 8, ainsi que son maintien, pendant son stockage, lorsqu'il n'est pas utilisé. Dans cette situation de stockage, une partie du masque 8 formant des oreilles de préhension 19 est saillante sur la face ouverte 9 et dépasse de la boîte 1 par les échancrures 18. Ceci permet la préhension du masque 8 même lorsque les portes 5, 6 sont fermées. Chaque échancrure 18 a une forme adaptée pour contourner la partie saillante des oreilles de préhension 19.

Comme représenté sur les figures 1 et 3, chaque échancrure 18 se poursuit, le long de chaque bord diagonal 17, en direction du point P de croisement des deux axes d'articulation X, X', par un décrochement 20 destiné au passage d'un tube d'alimentation (non représenté). Ce tube d'alimentation permet d'alimenter le masque 8 en gaz respiratoire. Ce tube d'alimentation est vissé au niveau d'un orifice 21 d'un dispositif d'arrivée de gaz respiratoire, tel qu'un régulateur à la demande 22, équipant le masque 8. Un bouton de test 31, pour tester le fonctionnement du régulateur 22, est accessible dans les échancrures 18, de manière à pouvoir tester le masque 8 in situ.

Une demi-ouverture 23 est également ménagée sur le bord diagonal 17, à proximité du point P de croisement des deux axes d'articulation X, X'. Deux demi-ouvertures 23 forment une fenêtre 24 circulaire qui se trouve, en coïncidence d'un voyant pneumatique 25 de l'ensemble pneumatique 7 (voir figure 1).

L'une des portes 5, 6 comporte une chambre 26 de réception d'un ensemble de commande 27 qui n'est représenté que sur la figure 1. Cet ensemble de commande 27 exerce une pression sur un axe de commande 28 d'un robinet de l'ensemble pneumatique 7.

Lors de l'extraction du masque 8, les deux portes 5, 6 s'ouvrent pour laisser passer le masque 8. L'axe de commande 28 ainsi libéré autorise l'ouverture du robinet de l'ensemble pneumatique 7. Ce robinet s'ouvre et alimente alors en gaz respiratoire, le régulateur 22.

Lorsque la porte 5 est refermée, une partie de l'ensemble de commande 27 s'escamote (comme expliqué dans le document FR-A-2 813 062) et permet au robinet de rester ouvert, tout en informant l'utilisateur de son ouverture, grâce au voyant 25 visible à travers la fenêtre 24.

L'ouverture du robinet actionne un interrupteur électrique qui permet de mettre sous tension un ensemble audio situé sur le masque et/ou d'envoyer une information au téléphone de bord sur l'utilisation de ce masque 8.

Lorsque l'utilisateur se sert du masque 8, le voyant 25 l'informe que le masque est bien alimenté en gaz respiratoire.

Lorsque le masque 8 n'est plus utilisé, une action sur un interrupteur de remise à zéro (« reset ») 29 permet de couper l'alimentation en gaz respiratoire du masque 8 et de réinitialiser un indicateur d'ouverture (comme indiqué dans le document FR-A-2 813 062) de l'ensemble pneumatique 7, ainsi que le circuit électrique de l'ensemble d'alimentation selon l'invention.

Pour ranger le masque 8, on ouvre les deux portes 5,6. Le masque 8 peut être alors inséré dans la boîte 1. Les deux portes 5, 6 sont ensuite refermées. Une action sur l'interrupteur 29 réinitialise l'ensemble d'alimentation selon l'invention.

La boîte 1 présente l'avantage qu'elle peut être placée à droite ou à gauche d'un utilisateur. Lorsque la boîte 1 est placée à droite de l'utilisateur les échancrures 18 se trouvent en haut à gauche. Lorsque la boîte 1 est située à gauche de l'utilisateur, les échancrures 18 se trouvent en haut à droite de la boîte 1. On peut donc placer indifféremment la boîte 1 à droite ou à gauche d'un utilisateur en la faisant pivoter de 90° autour du point P d'intersection des deux axes d'articulation X, X'.

## Revendications

1. Boîte de rangement pour masque (8) respiratoire de secours pour personnel navigant d'aéronef, cette boîte (1) comprenant :
- un châssis (3) formant un réceptacle pour le masque (8), comportant lui-même une face ouverte (9), pour l'introduction et l'extraction du masque (8), et
- au moins deux portes (5,6) obturant au moins partiellement la face ouverte (9) du châssis (3), les deux portes ou deux des portes (5,6) étant articulées autour de deux axes d'articulation (X,X') respectivement situés sur deux bords adjacents (15) de la face ouverte (9), sensiblement perpendiculaires l'un à l'autre.

2. Boîte selon la revendication 1, comportant deux portes (5,6) ayant chacune sensiblement une forme de plaque triangulaire, avec un sommet (14) comportant deux côtés (15,16) formant un angle droit, l'un (15) de ces côtés (15,16) étant articulé autour de l'un (X) des deux axes (X,X') d'articulation.

3. Boîte selon l'une des revendications précédentes, dans laquelle les portes (5,6) comportent chacune un bord diagonal (17), joignant les deux côtés (15,16) du sommet (14) formant un angle droit, ce bord diagonal (17) comportant une échancrure (18) symétrique, par rapport à la médiatrice (M) de l'angle s'étendant entre les deux axes (X,X') d'articulation, à l'échancrure du côté homologue de l'autre porte.

4. Boîte selon la revendication 3, dans laquelle l'échancrure (18) de chaque porte (5,6) est située à l'opposé du bord diagonal (17) par rapport au point (P) de croisement des deux axes (X,X') d'articulation.

5. Boîte selon l'une des revendications 3 et 4, dans laquelle la face ouverte (9) a une forme sensiblement carrée.

6. Boîte selon l'une des revendications précédentes, comportant, dans le châssis (3), un ensemble pneumatique (7) destiné à contrôler l'alimentation en gaz respiratoire du masque (8) respiratoire, et interagissant avec l'une (5) des portes (5,6), cet ensemble pneumatique (7) étant positionné à proximité de l'angle s'étendant entre les deux axes d'articulation (X,X').

7. Boîte selon la revendication 6, dans laquelle l'une (5) des portes (5,6) est munie d'un ensemble de commande (27) destiné à coopérer avec l'ensemble pneumatique (7), pour contrôler l'alimentation en gaz respiratoire du masque (8) respiratoire, cet ensemble de commande (27) étant situé à proximité de l'axe (X) d'articulation de cette porte.

8. Ensemble d'alimentation en gaz respiratoire pour personnel navigant d'aéronef, comprenant :
- un masque (8) respiratoire de secours comportant un dispositif d'arrivée de gaz respiratoire (22), et
- une boîte (1) selon l'une des revendications précédentes, cette boîte (1) étant adaptée pour recevoir le masque (8) orienté dans le châssis (3), avec le dispositif d'arrivée de gaz respiratoire occupant un angle de la face ouverte (9), opposée à celui correspondant au point (P) de croisement des axes d'articulation (X,X').

9. Ensemble selon la revendication 8, dans lequel le masque (8) comporte des oreilles de préhension (19), les portes (5,6) de la boîte (1) étant adaptées pour que les oreilles de préhension (19) soient au moins partiellement saillantes sur la face ouverte (9) et dépassent par des échancrures (18) ménagées dans les portes (5,6) afin de permettre la préhension du masque (8) même lorsque les portes (5, 6) sont fermées.

10. Ensemble d'alimentation en gaz respiratoire pour un membre de personnel navigant d'aéronef, comprenant :
- un masque (8) respiratoire de secours muni d'un régulateur (22) destiné à être raccordé à une conduite souple d'arrivée de gaz respiratoire, généralement d'oxygène,
- une boîte (1) de réception du masque, formant un réceptacle, ayant une face ouverte (9), de forme rectangulaire, d'introduction et d'extraction du masque (8) dans une orientation diagonale par rapport aux côtés de la face ouverte, munie de deux portes (5,6) déplaçables entre une position de fermeture, où elles obturent la face ouverte (9) en laissant en saillie une fraction du régulateur (22), et une position d'ouverture vers l'extérieur, permettant le passage du masque (8), par rotation sur le bord de la face ouverte (9) autour d'axes (X,X') respectifs placés sur deux côtés adjacents de la face ouverte (9).

## Claims

1. A stowage box for an emergency breathing mask (8) for the flight crew of an airplane, the box (1) comprising:
- a frame (3) forming a receptacle for the mask (8), the frame having an open face (9) through which the mask (8) is inserted and extracted; and
- at least two doors (5, 6) closing the open face (9) of the frame (3), at least in part, the two doors or two of the doors (5, 6) being hinged about two hinge axes (X, X') situated respectively on two adjacent edges (15) of the open face (9) and substantially perpendicular to each other.

2. A box according to claim 1, having two doors (5, 6) each substantially in the form of a triangular plate, with a vertex (14) having two sides (15, 16), forming a right angle, one (15) of these sides (15, 16) being hinged about one (X) of the two hinge axes (X, X').

3. A box according to any one of the previous claims, in which each of the doors (5, 6) has a diagonal edge (17) interconnecting the two sides (15, 16) of the vertex (14) forming a right angle, said diagonal edge (17) including a notch (18) that is symmetrical about the bisector (M) of the angle between the two hinge axes (X, X') with the notch in the corresponding edge of the other door.

4. A box according to claim 3, in which the notch (18) in each door (5, 6) is situated at the opposite end of the diagonal edge (17) from the point (P) of intersection between the two hinge axes (X, X').

5. A box according to any one of the claims 3 and 4, in which the open face (9) is substantially square in shape.

6. A box according to any one of the previous claims, having a pneumatic assembly (7) in the frame (3) for controlling the feed of breathing gas to the breathing mask (8) and interacting with one (5) of the doors (5, 6), said pneumatic assembly (7) being positioned close to the angle extending between the two hinge axes (X, X').

7. A box according to claim 6, in which one (5) of the doors (5, 6) is provided with a control assembly (27) for co-operating with the pneumatic assembly (7) to control the feed of breathing gas to the breathing mask (8), the control assembly (27) being situated close to the hinge axis (X) of said door.

8. A breathing gas feed assembly for the flight crew of an airplane, the assembly comprising:
- an emergency breathing mask (8) having a breathing gas delivery device (22); and
- a box (1) according to any one of the previous claims, the box (1) being adapted to receive the mask (8) oriented in the frame (3) so that the breathing gas delivery device occupies a corner of the open face (9) that is opposite from the corner corresponding to the point (P) of intersection of the hinge axes (X, X').

9. An assembly according to claim 8, in which the mask (8) has handle lugs (19), the doors (5, 6) of the box (1) being adapted so that the handle lugs (19) project at least in part from the open face (9), passing beyond notches (18) formed in the doors (5, 6) so as to enable the mask (8) to be grasped even when the doors (5, 6) are closed.

10. A breathing gas feed assembly for a member of the flight crew of an airplane, the assembly comprising:
- an emergency breathing mask (8) provided with a regulator (22) for connection to a flexible hose for feeding breathing gas, generally oxygen; and
- a mask-receiving box (1) forming a receptacle having an open face (9) of rectangular shape for inserting and extracting the mask (8) oriented diagonally relative to the sides of the open face, the open face being provided with two doors (5, 6) movable between a closed position in which they close the open face (9) while leaving a fraction of the regulator (22) projecting, and an outwardly open position enabling the mask (8) to pass through, the doors pivoting on respective edges of the open face (9) about respective axes (X, X') occupying two adjacent sides of the open face (9).

## Patentansprüche

1. Aufbewahrungsbehälter für eine Notatemmaske (8) für Flugzeugpersonal, welcher Behälter (1) umfasst:
- ein eine Aufnahme für die Maske (8) bildendes Gehäuse (3), das seinerseits eine offene Seite (9) zum Einführen und Herausnehmen der Maske (8) hat, und
- mindestens zwei die offene Seite (9) des Gehäuses (3) wenigstens teilweise verschließende Klappen (5, 6), wobei die beiden Klappen oder zwei der Klappen (5, 6) um zwei Schwenkachsen (X, X') drehbar gelagert sind, die sich an zwei aneinander stoßenden, im Wesentlichen zueinander senkrechten Rändern (15) der offenen Seite (9) befinden.

2. Behälter nach Anspruch 1 mit zwei Klappen (5, 6), die im Wesentlichen jeweils eine dreieckige Plattenform mit einer Spitze (14) mit zwei einen rechten Winkel bildenden Seitenkanten (15, 16) haben, wobei eine (15) dieser Seitenkanten (15, 16) um eine (X) der beiden Schwenkachsen (X, X') drehbar gelagert ist.

3. Behälter nach einem der vorstehenden Ansprüche, bei dem jede der Klappen (5, 6) jeweils eine Diagonalkante (17) hat, die die beiden einen rechten Winkel bildenden Seitenkanten (15, 16) der Ecke (14) verbindet, wobei diese Diagonalkante (17) eine Einbuchtung (18) hat, die bezüglich der Winkelhalbierenden (M) des zwischen den beiden Schwenkachsen (X, X') aufgespannten Winkels symmetrisch zu der Einbuchtung der gleichartigen Seite der anderen Klappe ist.

4. Behälter nach Anspruch 3, bei dem die Einbuchtung (18) jeder Klappe (5, 6) an dem dem Schnittpunkt (P) der beiden Schwenkachsen (X, X') gegenüber liegenden Ende der Diagonalkante (17) angeordnet ist.

5. Behälter nach einem der Ansprüche 3 und 4, bei dem die offene Seite (9) eine im Wesentlichen quadratische Form hat.

6. Behälter nach einem der vorstehenden Ansprüche, der eine pneumatische Einrichtung (7) in dem Gehäuse (3) umfasst, die zum Steuern der Atemgaszufuhr zu der Atemmaske (8) bestimmt ist und mit einer (5) der Klappen (5, 6) zusammenwirkt, wobei diese pneumatische Einrichtung (7) in der Nähe des zwischen den beiden Schwenkachsen (X, X') aufgespannten Winkels angeordnet ist.

7. Behälter nach Anspruch 6, bei dem die eine (5) der Klappen (5, 6) mit einer zum Zusammenwirken mit der pneumatischen Einrichtung (7) bestimmten Steuereinrichtung (27) zum Steuern der Atemgaszufuhr der Atemmaske (8) versehen ist, wobei diese Steuereinrichtung (27) in der Nähe der Schwenkachse (X) dieser Klappe angeordnet ist.

8. Einrichtung für die Atemgaszufuhr für Flugzeugpersonal, mit:
- einer Notatemmaske (8) mit einer Zufuhrvorrichtung für Atemgas (22) und
- einem Behälter (1) nach einem der vorstehenden Ansprüche, wobei dieser Behälter (1) dazu vorgesehen ist, die in dem Gehäuse (3) ausgerichtete Maske (8) aufzunehmen, und die Atemgas-Zufuhrvorrichtung einen Winkel der offenen Seite (9) einnimmt, der dem dem Schnittpunkt (P) der Schwenkachsen (X, X') entsprechenden Winkel gegenüber liegt.

9. Einrichtung nach Anspruch 8, bei der die Maske (8) Greifansätze (19) hat und die Klappen (5, 6) des Behälters (1) so ausgelegt sind, dass die Greifansätze (19) wenigstens teilweise über die offene Seite (9) vorstehen und in die Klappen (5, 6) eingebrachte Einbuchtungen (18) durchdringen, um das Ergreifen der Maske (8) selbst bei geschlossenen Klappen zu ermöglichen.

10. Einrichtung für die Atemgaszufuhr für ein Mitglied einer Flugzeugbesatzung, mit:
- einer Notatemmaske (8) mit einem zum Anschließen an eine flexible Zufuhrleitung für Atemgas, im Allgemeinen Sauerstoff, bestimmten Regler (22),
- einem Behälter (1) zum Aufnehmen der Maske mit einer offenen Seite (9) in rechteckiger Form zum Einführen und Herausnehmen der Maske (8) in einer zu den Seitenkanten der offenen Seite diagonalen Ausrichtung, der mit zwei Klappen (5, 6) ausgestattet ist, die zwischen einer Schließstellung, in der sie die offene Seite (9) verschließen, wobei sie einen Teil des Reglers (22) herausstehen lassen, und einer sich nach außen erstreckenden, das Passieren der Maske (8) ermöglichenden Öffnungsstellung bewegbar sind, indem sie am Rand der offenen Seite (9) um Achsen (X, X') geschwenkt werden, die jeweils an einer von zwei aneinander stoßenden Kanten der offenen Seite (9) liegen.
